# FASCICULE DE BREVET EUROPEEN

(11) **EP 0 936 789 B1**
(45) Date de publication et mention de la délivrance du brevet: **02.02.2005**
(21) Numéro de dépôt: 99200211.3
(22) Date de dépôt: 26.01.1999
(51) Int. Cl.: H04M 1/02

(54) **Dispositif de calage pour éléments séparés d'un combiné de téléphone mobile et combiné ainsi obtenu**
Vorrichtung für Polsterung von Teilen eines Mobiltelefon-Handapparates, und ein solcher Mobiltelefon-Handapparat
Device for cushioning the elements constituting a mobile telephone handset, and handset obtained

(30) Priorité: 10.02.1998 FR 9801547
(43) Date de publication de la demande: 18.08.1999
(73) Titulaire: Koninklijke Philips Electronics N.V., 5621 BA Eindhoven (NL)
(72) Inventeur: Pavet, Franck, 75008 Paris (FR)
(74) Mandataire: Charpail, François

(56) Documents cités:
- EP-A- 0 371 708
- US-A- 5 235 636
- PATENT ABSTRACTS OF JAPAN vol. 098, no. 002, 30 janvier 1998 & JP 09 270837 A (SONY CORP), 14 octobre 1997
- PATENT ABSTRACTS OF JAPAN vol. 016, no. 246 (E-1212), 5 juin 1992 & JP 04 051595 A (HITACHI LTD;OTHERS: 01), 20 février 1992

## Description

La présente invention concerne un dispositif de calage pour éléments séparés d'un combiné de téléphone mobile constitué par une nappe en matériau élastique comportant au moins un clavier et un logement pour un dispositif d'affichage.

L'invention concerne aussi un combiné de téléphone mobile muni d'un tel dispositif de calage.

Le téléphone mobile est un appareil qui, sans être particulièrement fragile, est plus que d'autres appareils électroniques sujet à chutes étant donnée sa manipulation avec une seule main le plus souvent. D'où la tendance accrue à munir les téléphones mobiles d'éléments de calage élastiques à l'intérieur du boîtier, qui font office d'amortisseurs, en cas de choc, pour les éléments contenus dans le boîtier.

D'autre part de tels appareils comportent en façade des éléments séparés qui captent ou émettent de l'information, tels le microphone, le clavier, le dispositif d'affichage et l'écouteur. Lors de l'assemblage de l'appareil ces éléments séparés doivent être disposés avec des positions mutuelles assez précises qui doivent correspondre avec des ouvertures pratiquées dans la face avant du boîtier. Le calage de ces éléments dans une nappe élastique procure le positionnement mutuel souhaité, ce qui facilite le montage.

Une telle nappe élastique comportant les éléments séparés de façade est connue notamment de la demande EP-A 0 702 478. La nappe en matériau souple est fixée par ses extrémités recourbées aux extrémités d'un circuit imprimé. Par ailleurs, outre un orifice pour le passage du microphone et des touches de clavier, cette nappe comporte un premier logement pour le dispositif d'affichage et un deuxième logement pour l'écouteur, ces logements ayant des parois recourbées qui assurent le maintien de ces deux éléments lors du montage et la partie en retour formant cadre des parois de ces logements assurant un bon calage élastique des éléments contre la partie intérieure de la coque avant du boîtier.

Une telle nappe procure bien les avantages précités de facilité de montage et de résistance au choc. Cependant une telle nappe, fabriquée par moulage est difficile à réaliser car les parties en retour pour le maintien du dispositif d'affichage, le maintien de l'écouteur et le maintien de l'ensemble sur la carte de circuit imprimé impliquent l'utilisation d'inserts coopérant avec les parois du moule. L'introduction de ces inserts puis leur extraction, à chaque opération de moulage compliquent cette opération et en augmentent la durée, ce qui conduit à augmenter le coût unitaire de chaque nappe fabriquée, étant entendu que le coût du matériau élastomère utilisé est faible devant celui de l'opération de moulage proprement dit.

Un but de l'invention est de fournir une nappe élastique, en matériau souple pour le calage mutuel d'éléments séparés d'un téléphone mobile, obtenue par moulage sans nécessiter d'insert.

Selon l'invention, ce but est atteint et les inconvénients de l'art antérieur sont atténués grâce au fait que le dispositif de calage défini en préambule est remarquable en ce que ladite nappe comporte en outre:
- une partie d'extension au-delà dudit logement, ladite partie d'extension comprenant un cadre de blocage pouvant être replié sur ledit logement, ledit cadre de blocage étant muni de moyens de fixation en positon de repli,
- une partie intermédiaire située entre ledit logement et ladite partie d'extension, ladite partie intermédiaire formant charnière et étant munie d'une fente destinée au passage d'une nappe de connexion dudit dispositif d'affichage.

Le dispositif d'affichage, prisonnier dudit logement fermé peut ainsi être exactement positionné par rapport aux touches du clavier et un calage souple dans le sens frontal de ce dispositif est assuré après montage des éléments séparés contre la coque avant du boîtier.

Un autre but de l'invention est de permettre un positionnement correct de la nappe de conducteurs qui relient le dispositif d'affichage aux autres composants de l'appareil.

Au-delà de ladite fente, la nappe de connexion est connectée à des pistes conductrices du circuit imprimé qui supporte la nappe en matériau élastique.

La description qui suit en regard des dessins annexés, le tout donné à titre d'exemple non limitatif, fera bien comprendre comment l'invention peut être réalisée.
La figure 1 est une vue en perspective du dispositif de calage selon l'invention.
La figure 2 est une vue en coupe sagittale d'un combiné de téléphone mobile incorporant le dispositif de calage de la figure 1.

Sur les figures les mêmes références représentent les mêmes éléments avec les mêmes fonctions.

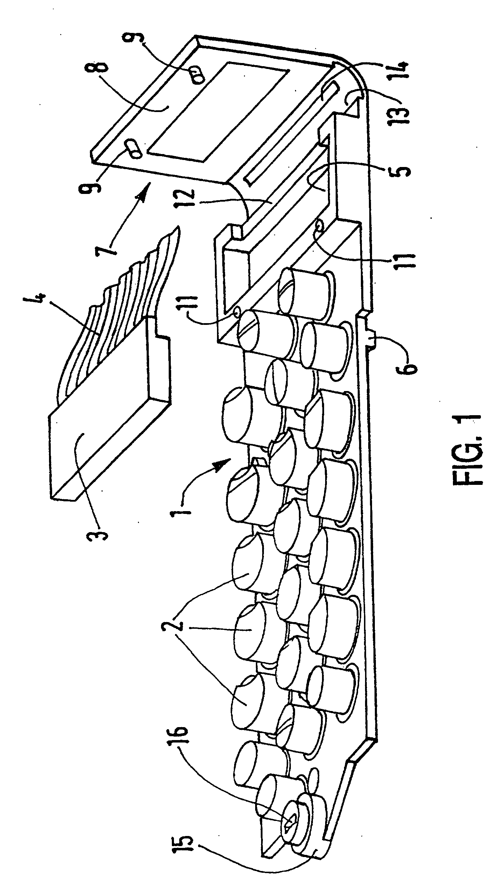

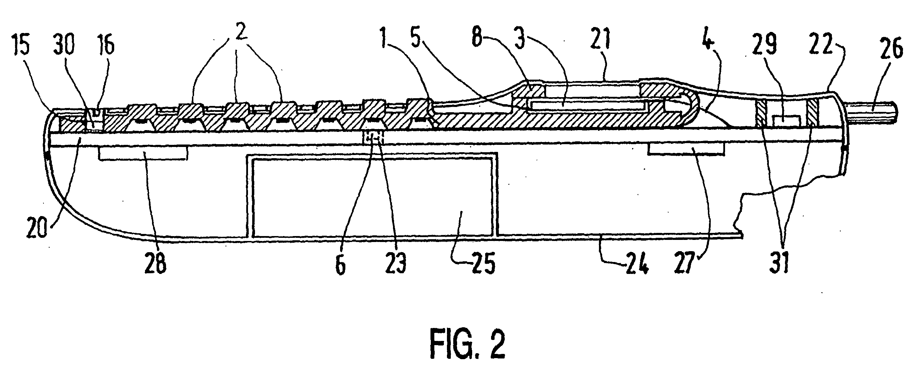

Le dispositif de calage 1 représenté à la figure 1 est conçu pour positionner des éléments dits séparés d'un combiné de téléphone mobile. Ces éléments sont essentiellement un clavier constitué par un ensemble de touches 2 et un dispositif d'affichage 3, à cristaux liquides le plus souvent, dit LCD (Liquid Crystal Display en anglais). Le dispositif d'affichage 3 est désigné par afficheur dans la suite du texte. Ces deux éléments ne sont pas fixement reliés à la coque avant du boîtier du combiné ni au circuit imprimé interne (20, figure 2) qui comporte d'autres éléments, à savoir des composants montés fixes. Pour cette raison, le clavier et l'afficheur sont qualifiés d'éléments séparés, qu'il convient de positionner de façon assez précise : d'une part les touches du clavier par rapport aux contacts électriques (non représentés) situés en regard sur le circuit imprimé et que ces touches doivent actionner, et d'autre part l'afficheur 3, relié par une nappe souple de conducteurs 4, dite limande, qu'il s'agit de positionner exactement en regard d'une lumière correspondante (21, figure 2) pratiquée dans la coque avant 22 de l'appareil.

Un moyen pour satisfaire les contraintes de positionnement indiquées au paragraphe précédent consiste à réaliser les touches du clavier sous forme d'une nappe souple (touches 2) et en ce que cette nappe souple comporte, en prolongement du clavier un logement 5 pour l'afficheur. Le positionnement final correct des éléments 2 et 3 est obtenu, lors du montage de l'appareil, du fait de positionner précisément la nappe souple 1 par rapport au circuit imprimé contre lequel elle est appliquée. A cet effet, selon un mode de réalisation préféré, des ergots 6 qui font saillie derrière la nappe 1, sont prévus pour être enfoncés dans des lacunes 23 du circuit imprimé 20. Ce circuit imprimé 20 est quant à lui correctement positionné de façon connue, par rapport à la coque avant 22.

Outre le positionnement correct de l'afficheur 3 en regard de la lumière 21 (figure 2), il convient d'assurer un bon calage de cet afficheur contre la coque avant 22 du combiné. Selon l'invention, ce calage est réalisé au moyen d'un rabat 7. Ce rabat consiste en une partie d'extension de la nappe souple 1 qui comporte déjà les éléments 2 et 5 ; il est constitué par un cadre de blocage 8 destiné à être replié sur le logement 5, après introduction de l'afficheur 3. Pour faciliter le montage de la nappe 1, il est prévu des moyens de fixation en position de repli du cadre 8 contre l'afficheur 3. Selon un mode de réalisation préféré de l'invention, la nappe 1 est constituée en un matériau élastomère moulé et les moyens de fixation consistent en au moins un ergot, sur le rabat 8 ou sur les parois du logement 5, à enfoncer dans un creux dans les parois du logement 5 ou du cadre 8. Sur la figure 1, deux ergots 9 sur le cadre 8 sont ainsi appelés à coopérer avec deux creux 11 dans les parois du logement 5 pour assurer la fixation précitée.

Comme déjà indiqué plus haut, une nappe ou limande 4 relie électriquement l'afficheur 3 à un circuit imprimé (20, figure 2). Cette limande est en général collée à l'afficheur 3 au moyen d'une colle conductrice anisotrope, soit à mi-épaisseur, comme représenté à la figure 1, soit sur la face avant comme le montre la figure 2. Lorsque l'afficheur est inséré dans son logement 5, il faut que la limande 4 puisse en sortir sans gêner cette insertion. A cet effet un chanfrein 12 a été prévu dans la paroi haute du logement 5. Ce chanfrein n'est cependant pas nécessaire avec l'afficheur 3 de la figure 2. Pour rejoindre le circuit imprimé 20 (figure 2), il est avantageux que la limande 4 traverse la nappe élastique 1. A cet effet, selon un mode de réalisation avantageux de l'invention, la nappe 1 comporte, entre le logement 5 et le cadre 8, une partie 13 formant charnière pour le cadre 8, partie intermédiaire amincie, de préférence, et comportant une fente 14 destinée au passage de la limande 4.

La figure 2 représente de façon simplifiée un combiné de téléphone mobile muni d'un boîtier constitué par la coque avant 22, une coque arrière 24, un logement 25 pour la batterie, pratiqué dans la coque arrière. Outre le boîtier on a aussi représenté une antenne 26 et le circuit imprimé 20 calé dans le boîtier. Contre le circuit imprimé 20 sont connectés des circuits intégrés tels que 27, 28 et autres composants actifs ou passifs non représentés. Du côté de la face avant du combiné, la nappe élastique 1 est maintenue en position correcte par les moyens de positionnement 6 et 23 et pincée entre le circuit imprimé 20 et la coque avant 22. Ainsi, l'afficheur 3 est bien maintenu en position latérale et frontale, même en cas de choc. A la figure 2 on a aussi représenté un écouteur 29 et un microphone 30. Le positionnement de ces deux éléments est à la fois moins critique et plus facile à réaliser que celui du clavier et de l'afficheur : moins critique parce que des tolérances plus grandes de leur position latérale par rapport à des orifices correspondants dans la coque peuvent être admises et plus faciles à réaliser car ces deux éléments sont, le plus souvent, rigidement liés au circuit imprimé 20 afin d'assurer leur liaison électrique et mécanique avec l'appareil. On notera, sur les figures 1 et 2, qu'il est prévu, dans la nappe 1 un logement 15 pour le microphone 30, muni d'une ouverture 16 pour le passage de la voix. Cette disposition, même si elle ne constitue pas un élément essentiel de l'invention, est avantageuse cependant car elle permet de protéger mécaniquement le microphone 30 et elle participe à l'assujettissement et au positionnement précis de la nappe 1 contre le circuit imprimé 20, ce qui facilite le montage de l'appareil en le rendant plus rapide.

L'écouteur 29 est monté de façon classique connue : il est prévu à sa proximité immédiate au moins une pièce en matériau souple 31, solidaire de la coque avant 22 et/ou du circuit 20, qui assure un bon calage de ces deux derniers éléments à l'endroit de l'écouteur 29, assurant une bonne protection contre les chocs et permettant d'éviter des vibrations de résonance parasites de certains éléments proches qui pourraient être induites par la voix reconstituée de l'interlocuteur distant. De préférence, la pièce 31 n'enferme pas complètement l'écouteur 29 afin qu'un volume de résonance suffisant soit conservé autour de l'écouteur.

## Revendications

1. Dispositif de calage (1) pour éléments séparés d'un combiné de téléphone mobile constitué par une nappe en matériau élastique, ladite nappe comprenant au moins un clavier (2) et un logement (5) pour un dispositif d'affichage (3), dispositif de calage **caractérisé en ce que** ladite nappe comporte en outre :
- une partie d'extension au-delà dudit logement (5), ladite partie d'extension comprenant un cadre de blocage (8) pouvant être replié sur ledit logement (5), ledit cadre de blocage (8) étant muni de moyens de fixation en position de repli,
- une partie intermédiaire située entre ledit logement (5) et ladite partie d'extension, ladite partie intermédiaire formant charnière et étant munie d'une fente (14) destinée au passage d'une nappe de connexion (4) dudit dispositif d'affichage (3).

2. Dispositif de calage selon la revendication 1 dans lequel lesdits moyens de fixation sont constitués par au moins un ergot (9) situé sur ledit cadre (8) et destiné à être enfoncé dans un creux (11) situé dans les parois dudit logement (5).

3. Combiné de téléphone mobile comportant un boîtier et un circuit imprimé (20) fixé dans ledit boîtier, combiné de téléphone mobile **caractérisé en ce qu'**il comporte en outre :
- un dispositif de calage constitué par une nappe en matériau élastique,
- des moyens de positionnement pour positionner ledit dispositif de calage par rapport audit circuit imprimé (20) et audit boîtier,
ladite nappe comprenant :
- au moins un clavier (2) et un logement (5) pour un dispositif d'affichage (3),
- une partie d'extension au-delà dudit logement (5), ladite partie d'extension comprenant un cadre de blocage (8) pouvant être replié sur ledit logement (5), ledit cadre de blocage (8) étant muni de moyens de fixation en position de repli,
- une partie intermédiaire située entre ledit logement (5) et ladite partie d'extension, ladite partie intermédiaire formant charnière et étant munie d'une fente (14) destinée au passage d'une nappe de connexion (4) dudit dispositif d'affichage (3).

4. Combiné de téléphone mobile selon la revendication 3, dans lequel lesdits moyens de positionnement sont constitués par au moins deux ergots (6) dudit dispositif de calage et destinés à être enfoncés dans des lacunes (23) correspondantes dudit circuit intégré (20).

## Patentansprüche

1. Vorrichtung zur Polsterung (1) für gesonderte Elemente eines Mobiltelefon-Handapparats gebildet aus einer Litze aus elastischem Material, wobei die besagte Litze mindestens eine Tastatur (2) und ein Aussparung (5) für ein Anzeigevorrichtung (3) aufweist, **dadurch gekennzeichnet**e Vorrichtung zur Polsterung, dass die besagte Litze außerdem enthält:
- Ein Verlängerungsteil über die besagte Aussparung (5) hinaus, wobei das besagte Verlängerungsteil einen Sperrrahmen (8) enthält, der in die besagte Aussparung (5) eingezogen werden kann, und der besagte Sperrrahmen (8) in eingezogener Position mit Befestigungsmitteln ausgestattet ist,
- ein Zwischenteil, zwischen der besagten Aussparung (5) und dem besagten Verlängerungsteil angeordnet, wobei das besagte Zwischenteil ein Scharnier bildet und mit einem Schlitz (14) für den Durchgang einer Anschlusslitze (4) der besagten Anzeigevorrichtung (3) ausgestattet ist.

2. Vorrichtung zur Polsterung nach Anspruch 1, in der die besagten Bestigungsmittel aus mindestens einem Stift (9) gebildet werden, der auf dem besagten Rahmen (8) angeordnet und dafür bestimmt ist, in eine Vertiefung (11) gedrückt zu werden, die in den Wänden der besagten Aussparung (5) angeordnet ist.

3. Mobiltelefon-Handapparat mit einem Gehäuse und einer gedruckten Schaltung (20), die in dem besagten Gehäuse befestigt ist, wobei der Mobiltelefon-Handapparat **dadurch gekennzeichnet ist, dass** er außerdem enthält:
- Eine Vorrichtung zur Polsterung, gebildet aus einer Litze aus elastischem Material,
- Positionierungsmittel, um die besagte Vorrichtung zur Polsterung in Bezug auf die besagte gedruckte Schaltung (20) und das besagte Gehäuse zu positionieren,
und die besagte Litze enthält:
- Mindestens eine Tastatur (2) und eine Aussparung (5) für eine Anzeigevorrichtung (3),
- ein Verlängerungsteil über die besagte Aussparung (5) hinaus, wobei das besagte Verlängerungsteil einen Sperrrahmen (8) enthält, der in die besagte Aussparung (5) eingezogen werden kann, und der besagte Sperrrahmen (8) in eingezogener Position mit Befestigungsmitteln ausgestattet ist,
- ein Zwischenteil, zwischen der besagten Aussparung (5) und dem besagten Verlängerungsteil angeordnet, wobei das besagte Zwischenteil ein Scharnier bildet und mit einem Schlitz (14) für den Durchgang einer Anschlusslitze (4) der besagten Anzeigevorrichtung (3) ausgestattet ist.

4. Mobiltelefon-Handapparat nach Anspruch 3, in dem die besagten Positionierungsmittel aus mindestens zwei Stiften (6) der besagten Vorrichtung zur Polsterung gebildet werden und dafür bestimmt sind, in die entsprechenden Auslassungen (23) der besagten integrierten Schaltung (20) gedrückt zu werden.

## Claims

1. A cushioning device (1) for separate elements of a mobile telephone handset, the cushioning device (1) being formed by a mat of elastic material, said material comprising at least a keyboard (2) and a housing (5) for a display panel (3), which cushioning device (1) is **characterized in that** said mat further includes:
- an extension part beyond said housing (5), said extension part comprising a locking frame (8) which can be folded onto said housing (5), said locking frame (8) having means for fastening it in folded position,
- an intermediate part located between said housing (5) and said extension part, said intermediate part forming a hinge and being provided with a slot (14) intended for passing a connection mat (4) through for said display panel (3).

2. A cushioning device as claimed in claim 1, in which said fastening means are formed by at least one lug (9) on said frame (8) and intended to be pushed into a recess in the wall of said housing (5).

3. A mobile telephone handset comprising a body and a printed circuit (20) fastened to said body, which mobile telephone handset is **characterized in that** it further comprises:
- a cushioning device formed by a mat of elastic material,
- positioning means for positioning said cushioning device relative to said printed circuit (20) and to said body,
said mat further comprising:
- at least a keyboard (2) and a housing (5) for a display panel (3),
- an extension part extending beyond the housing (5), said extension part comprising a locking frame (8) which can be folded onto said housing (5), said locking frame (8) having means for fastening it in folded position,
- an intermediate part located between said housing (5) and said extension part, said intermediate part forming a hinge and being provided with a slot (14) intended for passing a connection mat (4) through for said display panel (3).

4. A mobile telephone handset as claimed in claim 3, in which said positioning means are formed by at least two lugs (6) of said cushioning device and intended to be pushed into corresponding recesses (23) of said integrated circuit (20).
